# FASCICULE DE BREVET EUROPEEN

(11) **EP 2 102 832 B1**
(45) Date de publication et mention de la délivrance du brevet: **08.02.2012**
(21) Numéro de dépôt: 07858131.1
(22) Date de dépôt: 24.12.2007
(51) Int. Cl.: G08B 13/14, G06F 21/00

(54) **BOITIER SECURISE**
GESICHERTES GEHÄUSE
SECURED HOUSING

(30) Priorité: 22.12.2006 CH 20972006
(43) Date de publication de la demande: 23.09.2009
(73) Titulaire: Compagnie Industrielle et Financiere d'Ingenierie Ingenico, 92220 Neuilly sur Seine (FR)
(72) Inventeur: STRAUMANN, Reto, CH-1763 Granges Pacots (CH); BAYS, Jean-Nicolas, CH-1744 Chenens (CH)
(74) Mandataire: Bioret, Ludovic
(86) Numéro de dépôt international: PCT/EP2007/064533
(87) Numéro de publication internationale: WO 2008/077964

(56) Documents cités:
- EP-A- 1 160 647
- WO-A-2006/092591
- DE-B3- 10 337 567
- US-A1- 2006 049 941

## Description

### Domaine technique

La présente invention concerne un boîtier sécurisé pour protéger les éléments qu'il contient, par exemple des circuits électroniques, contre des manipulations frauduleuses.

### Etat de la technique

Les données traitées et sauvegardées dans des circuits électroniques peuvent s'avérer être de nature critique au niveau de la sécurité, notamment pour des transactions financières, lorsqu'il s'agit de mots de passe ou de codes d'accès. Ces informations sont la cible de pirates qui tentent de falsifier ces données ou de les utiliser à des fins frauduleuses.

De nombreuses mesures ont été prises au niveau logiciel pour réagir contre les tentatives d'accès non autorisé à des données. Au niveau matériel se pose le problème de restreindre l'accès physique à des pièces électroniques critiques contenant des données servant à l'authentification, ou des processeurs sur lesquels s'exécutent des programmes. De nombreuses méthodes existent pour empêcher l'accès physique à des pièces clé de dispositifs électroniques, notamment par l'enduit d'une couche supplémentaire de substrat ou des boîtiers hermétiquement scellés.

Plus récemment, des solutions sont apparues qui mettent en oeuvre des boîtiers dont les parois contiennent une couche de pièces conductrices afin de détecter toute tentative d'intrusion. Le brevet EP0924592 décrit par exemple un appareil électrique protégé contre les manipulations par une couche d'éléments électriques dont toute altération des propriétés conductrices est détectée et génère une alarme. Le brevet EP1432031 décrit par ailleurs un boîtier comprenant plusieurs plaques à circuits imprimés dont certaines sont destinées à détecter similairement des manipulations sur le boîtier.

Des améliorations concernant l'utilisation de circuits conducteurs pour détecter des manipulations sur des boîtiers se sont étendues aux terminaux de paiement, qui contiennent une ouverture pour l'introduction de la carte et présentent donc à priori une faiblesse supplémentaire au niveau de la protection contre l'accès physique aux composants électroniques.

Le brevet WO2005/08654 propose de résoudre ce problème en introduisant des pistes électriques dans la paroi du boîtier tout autour de l'ouverture afin de détecter un écartement éventuel, synonyme de tentative d'intrusion dans le boîtier ou de manipulation d'éléments à l'intérieur du boîtier.

D'autres solutions existent pour détecter l'ouverture du boîtier à l'aide d'un capteur. Il est envisageable par exemple de réagir lors de l'interruption d'un circuit électrique provoquée par le soulèvement du couvercle du boîtier.

Néanmoins aucune des solutions proposées ne permet de résoudre des problèmes d'adaptation de volume ou d'épaisseur. Les boîtiers des terminaux de paiement par exemple sont souvent logés dans une coque en plastique moulée ou injectée dont l'épaisseur du logement est mal contrôlée; cette épaisseur varie par exemple en cas de chocs, de manipulation ou lorsque l'utilisateur appuie sur le clavier du terminal, ce qui tend à écraser le couvercle puis à le soulever lorsque la pression est relâchée.

Les boîtiers sécurisés de l'art antérieur ne tolèrent pas de telles variations de volume ou d'épaisseur, même très faibles. Toute tentative de modification de l'épaisseur, par exemple pour forcer le boîtier dans une coque ou lors d'une manipulation, résulte fréquemment en une fausse alarme ou en l'endommagement du capteur.

Le document US2006/049941 décrit un boitier sécurisé pour composants électroniques dont les parois laterales permettent des variations d'épaisseur.

### Bref résumé de l'invention

Un but de la présente invention est de proposer un boîtier sécurisé pour composants électroniques, et en particulier pour un terminal de paiement, exempt des limitations de l'état de l'art connues.

La présente invention a en particulier pour but de proposer un boîtier sécurisé pour circuits électroniques pouvant être logé dans des coques en plastique à tolérances variables, et pouvant être manipulé sans précaution particulière en évitant le déclenchement d'alarmes intempestives.

Le boîtier de l'invention doit avantageusement permettre une ouverture pour accéder aux composants électroniques à l'intérieur lorsque l'alarme est désactivée.

Ces buts sont atteints en utilisant un boîtier sécurisé pour composants électroniques selon la revendication principale 1.

L'avantage du boîtier proposé est qu'il est possible de le loger dans différents volumes possibles. Un tel boîtier est par conséquent compatible avec différentes coques de protection comportant un logement d'épaisseur variable.

Par ailleurs, le fait que le boîtier ne soit pas scellé permet de l'ouvrir par exemple pour remplacer différents composants, notamment des composants endommagés ou périmés, par exemple une pile électrique.

### Brève description des dessins

L'invention sera mieux comprise grâce aux illustrations fournies par les figures annexées représentant différents modes de réalisation de l'invention.
La figure 1A illustre une coupe transversale d'un boîtier montrant notamment le capteur physique d'ouverture du boîtier et les parois latérales.
La figure 1 B représente une coupe transversale de la plaque de base du boîtier sur laquelle sont fixées des plaques formant une partie des parois latérales.
La figure 1C représente une vue de dessus du boîtier montrant le capteur physique d'ouverture du boîtier et le contour des parois latérales.
La figure 2A illustre une coupe transversale d'une autre variante possible de boîtier, certaines des parois latérales étant flexibles.
La figure 2B illustre une coupe transversale d'une autre variante possible de boîtier, certaines des parois latérales étant flexibles.
La figure 3 représente un exemple de détecteur d'ouverture comportant différents capteurs physiques et un module électronique.
La figure 4 montre des exemples de motifs pour les pistes électriques de détection d'intrusion.

### Description détaillée et exemples de mode de réalisation de l'invention

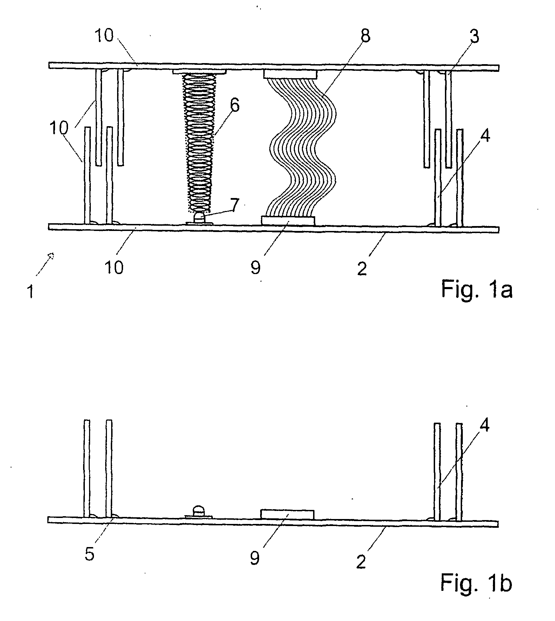

La figure 1A illustre une coupe transversale du boîtier sécurisé, comprenant une plaque de base 2, un couvercle 3, et des parois latérales 4 formées de plusieurs plaques s'emboîtant les unes dans les autres. Dans une variante préférentielle, la plaque de base 2 et le couvercle 3 sont constitués par des plaques à circuit imprimés (printed circuit boards ou PCBs). Des composants électroniques sont montés sur les faces internes de la plaque de base 2 et/ou du couvercle 3. Il est aussi possible de monter des composants non sécurisés sur les faces externes de la plaque de base 2 et/ou du couvercle 3, par exemple des connecteurs, un clavier, un écran, un lecteur de cartes, etc. On veillera cependant à éviter de rendre des pistes électriques ou des composants accessibles depuis l'extérieur du boîtier lorsque l'accès à ces composants compromet la sécurité des données protégées. Dans une variante préférentielle, la plaque de base 2, le couvercle 3 et/ou les parois latérales 4 sont constitués de circuits imprimés multicouches comprenant par exemple une ou plusieurs couches internes pour les composants, une couche de masse pour effectuer un blindage électromagnétique, et une couche de détection d'intrusions décrite plus bas. Des trous traversant peuvent être prévus pour connecter des composants non sensibles sur les faces externes du boîtier ou ailleurs à l'extérieur du boîtier. Un câble, par exemple un câble plat 8, et un connecteur 9 permettent d'établir une connexion électrique entre les composants électroniques sur la plaque de base 2 et les composants sur le couvercle 3.

La figure 1A montre de plus un capteur physique d'ouverture du boîtier comportant deux pièces 6 et 7 en contact l'une avec l'autre lorsque le boîtier est fermé. Une des pièces, dans l'exemple la première pièce de contact 6 solidaire du couvercle, peut être constituée en partie d'un élément élastique comme un ressort qui la maintient en compression contre l'autre pièce 7 solidaire de la plaque de base. Lorsque le ressort qui pousse une des électrodes contre l'autre pour assurer un contact dans la plage de variation permise est en bout de course, complètement détendu, les électrodes ne sont plus en contact et un courant électrique est interrompu, ce qui peut être détecté par un module électronique décrit plus loin.

La course de l'élément élastique détermine dans cet exemple la variation possible d'épaisseur du boîtier. Dans une variante préférentielle, la course est supérieure à 3 millimètres, de préférence supérieure à 5 millimètres ou même de l'ordre de 10 millimètres ou plus.

Un détecteur d'ouverture employant le capteur décrit ci-dessus, qui fonctionne comme un interrupteur électrique, présente l'avantage d'être simple à implémenter et fiable dans la mesure où le seuil de détection d'ouverture du boîtier correspond à la rupture d'un contact physique. La transmission de l'état d'ouverture ou de fermeture du système peut être gérée par une entrée et une sortie numérique sur un microprocesseur. Par ailleurs cette variante de capteur ne consomme presque pas de courant. Ce mode de réalisation pour le capteur n'est cependant pas limitatif; dans d'autres modes de réalisation, il pourra être conçu capacitif, résistif, magnétorésistif voire optique. Des capteurs non binaires, qui délivrent un signal de sortie non binaire fonction de l'épaisseur du boîtier, peuvent aussi être employés. Par ailleurs, le capteur peut être lié aux parois latérales 4 du boîtier, ou même constitué par une portion de ces parois latérales.

Le détecteur d'ouverture du boîtier selon l'invention comporte, en plus du capteur physique, un module électronique (non représenté) pour traiter les signaux transmis par le capteur physique et décider d'une réaction appropriée. Dans le cas d'un capteur physique fournissant des signaux binaires, le module électronique peut être constitué par un circuit logique numérique, par exemple un microcontrôleur. Un module de traitement analogique plus sophistiqué pourra être prévu entre le microcontrôleur et le capteur physique lorsque le signal fourni par le capteur consiste en une valeur de mesure finie (une capacité, un champ magnétique, etc).

Le seuil d'ouverture à partir duquel une réaction est entreprise peut être déterminé par le capteur physique lui-même, comme dans l'exemple illustré, ou par le module électronique associé, notamment dans le cas d'un capteur physique fournissant une valeur de sortie comportant plus de deux états possibles. Les valeurs de seuil sont prédéfinies et entrées dans une mémoire programmable du module électronique.

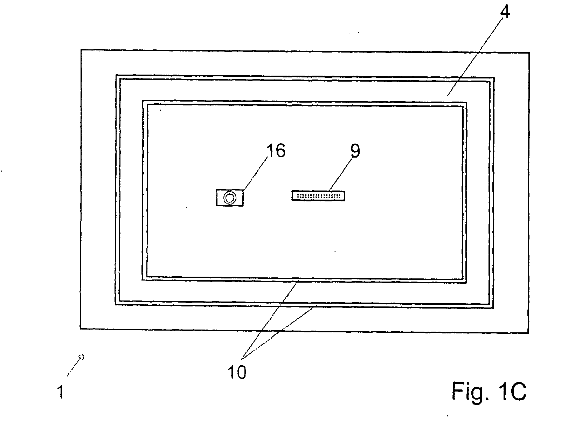

Dans l'exemple illustrée par les figures 1A, 1B et 1C, les parois latérales sont composées de plusieurs plaques 4 soudées ou vissées à la plaque de base 2 qui s'emboîtent dans plusieurs autres plaques soudées ou vissées au couvercle 3. Un tel agencement constitue une chicane qui permet d'empêcher l'introduction d'un objet à l'intérieur du boîtier en écartant les plaques qui forment la paroi. Il est cependant possible dans le cadre de l'invention d'employer une seule plaque liée au couvercle et une seule plaque liée à la plaque de base, ou un nombre de plaques quelconque.

Les plaques peuvent être fixées respectivement à la plaque de base 2 et au couvercle 3 de telle sorte que des forces de frottement les maintiennent dans une position fixe de repos mais permettant néanmoins aux plaques de coulisser l'une sur l'autre. La génération de ces forces de frottement pourra être réalisée soit en jouant sur l'épaisseur et la position des plaques constituant les parois, soit en inclinant légèrement les plaques constituant les parois latérales en les fixant par rapport à la plaque de base ou au couvercle selon un axe légèrement différent de la verticale. Dans une variante préférentielle, la position verticale du couvercle par rapport à la plaque de base est déterminée à l'aide de colonnes comportant un premier élément lié à la plaque de base et un deuxième élément lié au couvercle, les deux éléments étant vissés ou fixés à l'aide de clips l'un à l'autre. Il est aussi possible de fixer la plaque de base et le couvercle aux demi-coques d'un boîtier externe non représenté, l'assemblage des deux demi-coques étant effectué en emboîtant les plaques 4. L'épaisseur du boîtier est déterminée dans ce cas par la géométrie du logement entre les deux demi-coques. Dans le cas où la demi-coque supérieure comporte par exemple un clavier et un écran, le boîtier externe peut par exemple consister en un terminal de paiement.

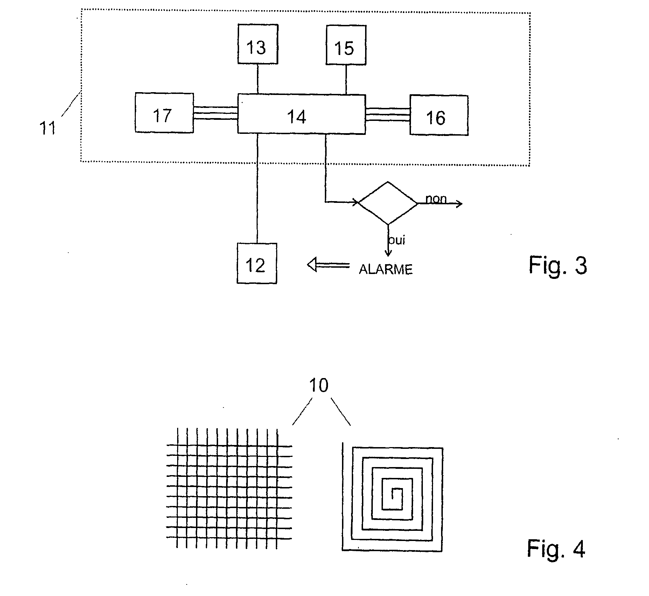

Dans une variante préférentielle d'exécution, les parois latérales 4 seront munies de pistes électriques 10 dont les ruptures ou déformations peuvent être détectées afin de réagir en cas de perçage ou bris du boîtier. Il pourra s'agir par exemple d'un circuit maillé (« mesh circuit ») ou en spirale qui détectera toute tentative de perçage. Des motifs possibles de ces circuits sont illustrés par la figure 4. La détection pourra être effectuée directement par un microprocesseur ou par un module électronique qui détectera une variation par exemple de la résistance du circuit maillé.

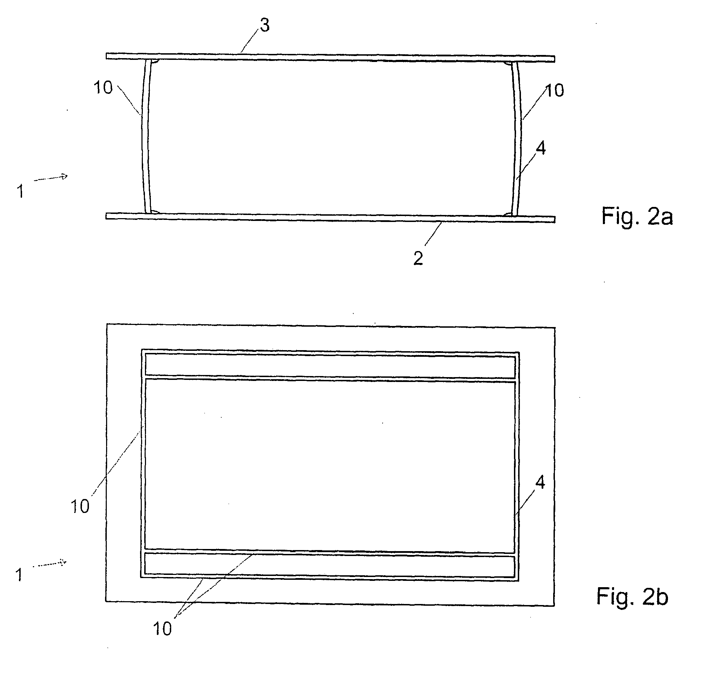

Une autre variante de réalisation peut consister à mettre en oeuvre une ou plusieurs parois latérales 4 en PCB flexible fixées hermétiquement à la plaque de base 2 et/ou au couvercle 3. Dans cette variante l'ouverture s'effectue soit par un côté du boîtier dans le cas où la plaque est fixée à la fois à la plaque de base et au couvercle, soit en désolidarisant une partie de la plaque par exemple au couvercle, conformément aux illustrations des figures 2A et 2B. Dans ce cas les extrémités de la plaque comporteront des connecteurs électriques faisant office de pièces de capteur physique 6 et 7. Cette variante fournit les mêmes propriétés anti-perçage et de variabilité d'épaisseur mais est néanmoins plus coûteuse.

La présence de pistes électriques 10 contre les tentatives de perçage peut évidemment également s'appliquer à la plaque de base 2 et/ou au couvercle 3 ; dans ce cas une nouvelle couche de substrat contenant les pistes électriques 10 sera requise.

La figure 3 illustre un détecteur d'ouverture 11 qui pourra être utilisé dans une variante préférentielle de l'invention. Un détecteur d'ouverture 11 permet de détecter différentes formes d'intrusion, incluant non seulement l'ouverture illicite du boîtier, mais aussi le percement des parois et/ou des manipulations interdites, afin de décider de l'opportunité d'une réaction. Il rassemble ainsi un ou plusieurs composants et/ou modules électroniques pour l'analyse et l'interprétation des signaux de un ou plusieurs capteurs physiques ou logiciels. La réaction du détecteur d'ouverture peut être déterminée par logiciel et comprendre par exemple la génération d'une alarme acoustique ou visuelle, l'envoi d'un message d'alarme par exemple au travers d'une interface sans fil, la destruction du contenu du boîtier, l'effacement d'une mémoire, le blocage permanent ou temporaire d'une fonction ou d'un composant, etc.

Dans le mode d'exécution représenté, le détecteur d'ouverture 11 comprend un microcontrôleur 14 auquel sont reliés le capteur physique d'ouverture 16 du boîtier et un capteur physique 17 de détection de détérioration des pistes électriques 10, le capteur physique 17 pouvant être constitué par une piste connectée à deux entrées/sorties du microcontrôleur 14. Ce microcontrôleur 14 interprète les signaux transmis par les capteurs physiques 16,17 par rapport aux valeurs seuil qu'il a en mémoire 15 et génère une réaction appropriée. Cette réaction peut par exemple consister à effacer une mémoire contenant des données critiques 12, comme des données d'authentification. Dans le cas de capteurs physiques non binaires, comme décrit précédemment, le ou lesdits capteurs physiques 16,17 peuvent être reliés au microcontrôleur 14 par l'intermédiaire d'un ou plusieurs modules électroniques et/ou analogiques intermédiaires additionnels. Le microcontrôleur 14 peut par ailleurs être relié à une horloge 13 qui permet par exemple de tolérer ainsi l'ouverture du couvercle 3 à des instants précis sans générer d'alarme.

Le boîtier sécurisé proposé par l'invention s'avère particulièrement adapté pour les terminaux de paiement. Dans une variante non représentée, une paroi latérale présente une ouverture pour permettre d'introduire une carte à puces ou une carte magnétique, le lecteur de carte se trouvant alors dans le boîtier sécurisé. Un tel boîtier selon une variante préférentielle de l'invention permet de détecter l'écartement de l'ouverture par laquelle la carte est censée être introduite et déclencher une alarme, mais il peut par contre toutefois toujours être ouvert pour remplacer des pièces comme par exemple une batterie.

Des connecteurs ou des câbles peuvent traverser les parois du boîtier pour connecter une batterie, un lecteur de carte externe, un affichage à LEDs ou LCDs, un clavier ou encore un haut-parleur. L'invention s'applique aussi à des boîtiers sécurisés sur moins de 6 faces, par exemple sur 5 faces uniquement; une des faces peut être ouverte dans le cas du montage contre une paroi, ou fermée par un composant.

### Liste des références

(1) Boîtier
(2) Plaque de base
(3) Couvercle
(4) Parois latérales
(5) Moyens de fixation des parois latérales à la plaque de base et/ou des parois latérales au couvercle
(6) Première pièce du capteur physique d'ouverture du boîtier
(7) Deuxième pièce du capteur physique d'ouverture du boîtier
(8) Câble plat de connexion électrique
(9) Fiches du connecteur électrique sur les PCBs
(10) Pistes électriques de détection d'intrusion (p.ex. mesh)
(11) Détecteur d'ouverture
(12) Mémoire contenant des données critiques
(13) Horloge
(14) Module électronique, p.ex. un microcontrôleur
(15) Mémoire comprenant les valeurs seuil pour le déclenchement de l'alarme
(16) Capteur physique d'ouverture du boîtier
(17) Capteur physique de détection de détérioration des pistes électriques (10)

## Revendications

1. Boîtier sécurisé pour composants électroniques, comprenant :
- une plaque de base (2), un couvercle (3) et des parois latérales (4) définissant un volume sécurisé pour les composants électroniques, et
- un détecteur d'ouverture du boîtier (11) comprenant un capteur physique oú
- l'agencement des parois latérales (4) permet des variations d'épaisseur du boîtier entre ladite plaque de base (2) et ledit couvercle (3), de façon à pouvoir loger ledit boîtier dans différentes coques de protection présentant différents volumes intérieurs possibles, et en ce que
- ledit détecteur d'ouverture (11) ne réagit à l'ouverture du boîtier que lorsque l'amplitude des variations d'épaisseur dépasse un seuil déterminé, de façon à éviter le déclenchement d'alarmes intempestives, et **caractérisé en ce que** ledit détecteur d'ouverture du boitier comprend un module électronique pour traiter les signaux transmis par le capteur physique, et
- les valeurs dudit seuil sont prédéfinies et entrées dans une mémoire programmable du module électronique.

2. Le boîtier sécurisé de la revendication 1, ledit détecteur d'ouverture comprenant un capteur physique (16) et un module électronique (14),
ledit capteur physique (16) générant des signaux dépendant de l'épaisseur du boîtier,
le module électronique (14) traitant les signaux dudit capteur physique pour déclencher une réaction lorsque ledit seuil de variations a été dépassé.

3. Le boîtier sécurisé de la revendication 1, ledit détecteur d'ouverture comprenant un capteur physique (16) et un module électronique (14),
ledit capteur physique (16) envoyant un signal électrique audit module électronique lorsque ledit seuil de variations a été dépassé.

4. Le boîtier sécurisé de la revendication 3, dans lequel le capteur physique (16) comporte une électrode (6) liée au couvercle (3) et une électrode (7) liée à la plaque de base (2), un élément élastique maintenant lesdites électrodes en contact galvanique tant que ledit seuil de variations n'a pas été dépassé.

5. Le boîtier sécurisé de l'une des revendications 2 à 4, dans lequel le capteur physique (16) est muni de pièces de contact formant un condensateur électrique dont la variation de capacité est utilisée comme paramètre pour la détection.

6. Le boîtier sécurisé de l'une des revendications précédentes, dans lequel au moins une paroi latérale (4) comporte une plaque de circuit imprimé montée perpendiculairement sur la plaque de base (2) et une plaque de circuit imprimé montée perpendiculairement sur le couvercle (3), lesdites plaques de circuit imprimé coulissant l'une contre l'autre.

7. Le boîtier sécurisé de l'une des revendications précédentes, certaines parois latérales (4) étant composées de plusieurs plaques fixées à ladite plaque de base (2) qui s'emboîtent dans plusieurs autres plaques elles-mêmes fixées audit couvercle (3).

8. Le boîtier sécurisé de l'une des revendications précédentes, certaines parois latérales (4) étant flexibles.

9. Le boîtier sécurisé de l'une des revendications 1 à 3, dans lequel au moins une partie de ladite plaque de base (2), dudit couvercle (3) et/ou desdites parois latérales (4) est munie de pistes électriques (10) dont les ruptures ou déformations, notamment lors de tentatives de perçage au travers du boîtier, sont détectées.

10. Le boîtier sécurisé de l'une des revendications précédentes, muni d'une ouverture pour l'introduction d'une carte à puces ou d'une carte magnétique.

11. Le boîtier sécurisé de l'une des revendications précédentes, dans lequel ledit détecteur d'ouverture (11) étant lié à un module électronique (14) pouvant agir sur une mémoire du système (12), afin par exemple de provoquer l'effacement de la mémoire en cas d'ouverture.

12. Le boîtier sécurisé de la revendication 11, le circuit électronique de contrôle (11) étant relié à une horloge (13) tolérant l'ouverture du couvercle (3) à des instants déterminés sans que cette ouverture ne soit interprétée comme une intrusion par le détecteur d'ouverture.

13. Terminal de paiement comportant un boîtier selon l'une des revendications précédentes, le boîtier étant monté dans une coque plastique, le couvercle (3) étant solidaire d'une demi-coque supérieure comportant un clavier et un écran, la plaque de base (2) étant solidaire d'une demi-coque inférieure, l'épaisseur du boîtier étant défini par ladite coque.

## Claims

1. Secured case for electronic components, comprising:
- a basic board (2), a cover (3) and lateral walls (4) defining a secured volume for the electronic components, and
- an opening detector of the case (11) comprising a physical sensor,
wherein
- the arrangement of the lateral walls (4) allow for variations in thickness of the case between said basic board (2) and said cover (3), in such a way as to be able to house said case in different protective shells presenting different possible inner volumes, and in that
- said opening detector (11) reacts to the opening of the case only when the amplitude of the variations in thickness exceeds a determined threshold, in such a way as to avoid triggering untimely alarms, and **characterized in that** said opening detector of the case comprises an electronic module for processing signals transmitted by the physical sensor, and
- the values of said threshold are predefined and entered into a programmable memory of the electronic module.

2. Secured case of claim 1, said opening detector comprising a physical sensor (16) and an electronic module (14),
said physical sensor (16) generating signals that depend on the thickness of the case,
the electronic module (14) processing the signals of said physical sensor to trigger a reaction when said threshold of variations has been exceeded.

3. Secured case of claim 1, said opening detector comprising a physical sensor (16) and an electronic module (14),
said physical sensor (16) sending an electrical signal to said electronic module when said variation threshold has been crossed.

4. Secured case of claim 3, wherein the physical sensor (16) comprises an electrode (6) linked to the cover (3) and an electrode (7) linked to the basic board (2), an elastic element maintaining said electrodes in galvanic contact as long as said threshold of variations has not been exceeded.

5. Secured case of one of claims 2 to 4, wherein the physical sensor (16) is provided with contact parts forming an electric capacitor of which the variation in capacitance is used as a parameter for the detection.

6. Secured case of one of the preceding claims, wherein at least one lateral wall (4) comprises a printed circuit board mounted perpendicularly on the basic board (2) and a printed circuit board mounted perpendicularly on the cover (3), said printed circuit boards sliding one against the other.

7. Secured case of one of the preceding claims, certain lateral walls (4) being composed of several boards fixed to said basic board (2) that nests into several other boards themselves fixed to said cover (3).

8. Secured case of one of the preceding claims, certain lateral walls (4) being flexible.

9. Secured case of one of claims 1 to 3, wherein at least one portion of said basic board (2), of said cover (3) and/or of said lateral walls (4) is provided with electrical tracks (10) of which the ruptures or deformations, in particular during attempts to perforate through the case, are detected.

10. Secured case of one of the preceding claims, provided with an opening for the introduction of a chip card or of a magnetic card.

11. Secured case of one of the preceding claims, wherein said opening detector (11) being linked to an electronic module (14) able to act on a storage device of the system (12), in order for example to cause the erasing of the specification in the event of opening.

12. Secured case of claim 11, the electronic control circuit (11) being connected to a clock (13) tolerating the opening of the cover (3) at determined moments without this opening being interpreted as an intrusion by the opening detector.

13. Payment terminal comprising a case according to one of the preceding claims, the case being mounted in a plastic shell, the cover (3) being integral with an upper half-shell comprising a keypad and a screen, the basic board (2) being integral with a lower half-shell, the thickness of the case being defined by said shell.

## Patentansprüche

1. Gesichertes Gehäuse für elektronische Bauelemente, das Folgendes umfasst:
- eine Grundplatine (2), eine Abdeckung (3) und Seitenwände (4), die einen sicheren Rauminhalt für die elektronischen Bauelemente abgrenzen, und
- einen Gehäuse-Öffnungsmelder (11), der einen physikalischen Sensor umfasst,
wobei
- die Anordnung der Seitenwände (4) Veränderungen der Dicke des Gehäuses zwischen der Grundplatine (2) und der Abdeckung (3) derart ermöglicht, dass das Gehäuse in verschiedenen Schutzschalen eingebaut werden kann, die verschiedene mögliche Innenräume aufweisen, und wobei
- der Öffnungsmelder (11) nur auf die Öffnung des Gehäuses reagiert, wenn die Amplitude der Veränderungen der Dicke einen bestimmten Schwellenwert überschreitet, derart, dass das Auslösen von Fehlalarmen vermieden wird, **dadurch gekennzeichnet, dass** der Gehäuse-Öffnungsmelder ein elektronisches Modul zum Verarbeiten der durch den physikalischen Sensor übermittelten Signale umfasst und
- die Werte des Schwellenwerts vordefiniert sind und in einen programmierbaren Speicher des elektronischen Moduls eingegeben sind.

2. Gesichertes Gehäuse nach Anspruch 1, wobei der Öffnungsmelder einen physikalischen Sensor (16) und ein elektronisches Modul (14) umfasst,
wobei der physikalische Sensor (16) Signale erzeugt, die von der Dicke des Gehäuses abhängig sind,
wobei das elektronische Modul (14) die Signale des physikalischen Sensors verarbeitet, um eine Reaktion auszulösen, wenn der Schwellenwert der Veränderungen überschritten wurde.

3. Gesichertes Gehäuse nach Anspruch 1, wobei der Öffnungsmelder einen physikalischen Sensor (16) und ein elektronisches Modul (14) umfasst,
wobei der physikalische Sensor (16) dem elektronischen Modul ein elektrisches Signal sendet, wenn der Schwellenwert der Veränderungen überschritten wurde.

4. Gesichertes Gehäuse nach Anspruch 3, wobei der physikalische Sensor (16) eine Elektrode (6), die mit der Abdeckung (3) verbunden ist, und eine Elektrode (7) umfasst, die mit der Grundplatine (2) verbunden ist, wobei ein elastisches Element die Elektroden in galvanischer Berührung hält, solange der Schwellenwert der Veränderungen nicht überschritten wurde.

5. Gesichertes Gehäuse nach einem der Ansprüche 2 bis 4, wobei der physikalische Sensor (16) mit Kontaktstücken versehen ist, die einen elektrischen Kondensator bilden, dessen Kapazitätsveränderung als Parameter für die Meldung verwendet wird.

6. Gesichertes Gehäuse nach einem der vorhergehenden Ansprüche, wobei mindestens eine Seitenwand (4) eine gedruckte Leiterplatte, die senkrecht auf der Grundplatine (2) eingebaut ist, und eine gedruckte Leiterplatte umfasst, die senkrecht auf der Abdeckung (3) eingebaut ist, wobei die gedruckten Leiterplatten in Bezug aufeinander gleiten.

7. Gesichertes Gehäuse nach einem der vorhergehenden Ansprüche, wobei bestimmte Seitenwände (4) aus mehreren an der Grundplatine (2) befestigten Platinen zusammengesetzt sind, die mit mehreren anderen Platinen ineinandergreifen, die ihrerseits an der Abdeckung (3) befestigt sind.

8. Gesichertes Gehäuse nach einem der vorhergehenden Ansprüche, wobei bestimmte Seitenwände (4) biegsam sind.

9. Gesichertes Gehäuse nach einem der Ansprüche 1 bis 3, wobei mindestens ein Abschnitt der Grundplatine (2), der Abdeckung (3) und/oder der Seitenwände (4) mit elektrischen Leiterbahnen (10) versehen ist, deren Brüche oder Verformungen, insbesondere bei Bohrversuchen durch das Gehäuse, gemeldet werden.

10. Gesichertes Gehäuse nach einem der vorhergehenden Ansprüche, das mit einer Öffnung zur Einführung einer Chipkarte oder einer Magnetkarte versehen ist.

11. Gesichertes Gehäuse nach einem der vorhergehenden Ansprüche, wobei der Öffnungsmelder (11) mit einem elektronischen Modul (14) verbunden ist, das auf einen Speicher des Systems (12) einwirken kann, um zum Beispiel im Falle des Öffnens das Löschen des Speichers zu bewirken.

12. Gesichertes Gehäuse nach Anspruch 11, wobei die elektronische Steuerschaltung (11) mit einer Uhr (13) verbunden ist, die die Öffnung der Abdeckung (3) zu bestimmten Zeitpunkten duldet, ohne dass diese Öffnung durch den Öffnungsmelder als ein Eindringen gedeutet wird.

13. Zahlungsterminal, das ein Gehäuse nach einem der vorhergehenden Ansprüche umfasst, wobei das Gehäuse in eine Kunststoffschale eingebaut ist, wobei die Abdeckung (3) fest mit einer oberen Halbschale verbunden ist, die eine Tastatur und einen Bildschirm umfasst, wobei die Grundplatine (2) fest mit einer unteren Halbschale verbunden ist, wobei die Dicke des Gehäuses durch die Schale bestimmt ist.
